# EUROPÄISCHE PATENTSCHRIFT

(11) **EP 2 983 861 B1**
(45) Veröffentlichungstag und Bekanntmachung des Hinweises auf die Patenterteilung: **05.04.2017**
(21) Anmeldenummer: 14722080.0
(22) Anmeldetag: 24.02.2014
(51) Int. Cl.: A61C 13/12

(54) **BEARBEITUNGSZENTRUM**
MACHINING CENTER
CENTRE D'USINAGE

(30) Priorität: 08.04.2013 DE 102013005871
(43) Veröffentlichungstag der Anmeldung: 17.02.2016
(73) Patentinhaber: Dental Conceptworks UG, 37194 Wahlsburg (DE)
(72) Erfinder: MASCHMANN, Ralf, 32657 Lemgo (DE); REINS, Hartmut, 16567 Schönfließ (DE); KAFFKA, Michael, 37170 Uslar (DE); NÜCKEL, Stefanie, 37194 Wahlsburg (DE)
(74) Vertreter: Rieke, Andreas
(86) Internationale Anmeldenummer: PCT/DE2014/000069
(87) Internationale Veröffentlichungsnummer: WO 2014/166464

(56) Entgegenhaltungen:
- DE-A1-102009 011 676
- DE-A1-102010 035 669
- JP-A- 2004 130 419
- JP-A- 2012 206 209

## Beschreibung

Die Erfindung betrifft ein numerisch gesteuertes Bearbeitungszentrum, insbesondere ein mehrachsiges Bohr- und Fräszentrum, mit einer mehrachsigen, eine vertikale Spindel aufweisenden Bohr- und Fräsvorrichtung.

Numerisch, insbesondere CNC-gesteuerte Bearbeitungszentren sind in vielfältigen Ausführungsformen bekannt und bewährt. Es sind solche Werkzeugmaschinen von hohem Automatisierungsgrad für die vollständige Bearbeitung von Werkstücken in der Industrie vielfältig im Einsatz. Gefertigt werden in der Regel auf derartigen Bearbeitungsmaschinen mittlere bis große Losgrößen, da der Programmierungsaufwand insbesondere bei Werkstücken komplexer Geometrie doch relativ aufwendig ist.

So ist es wenig verwunderlich, dass in der Dentaltechnik derartige Bearbeitungszentren bislang kaum Verwendung fanden, da zahntechnische Modelle in aller Regel individuelle Einzelstücke sind. Entsprechend individuell, nach Vorgaben wie einem Abdruck, wurden auf Fräsvorrichtungen wie sie aus der DE 199 16 449 A1 bekannt sind, beispielsweise Teile eines Gebisses gefertigt.

Mit der zunehmenden Erstellung von 3D-Scans der Mundhöhle und der Fertigung von Modellen in 3D-Druckern bietet sich nunmehr die Möglichkeit, die eingangs genannten numerisch gesteuerten Bearbeitungszentren auch in der Dentaltechnik einzusetzen.

Ein derartiges Bearbeitungszentrum ist aus der DE 10 2009 011 676 A1 bekannt. Die Spindel mit eingespanntem Werkzeug ist dort in einem Werkzeugführungs- und -haltesystem um drei Achsen bewegbar über einem Werkstück angeordnet. Das in einem Haltering angeordnete Werkstück wird von einem Werkstückhalter frei gehalten und ist mit diesem durch ein Werkstückführungs- und -haltesystem um eine horizontale Achse verdrehbar und in einer horizontalen Ebene verschiebbar unter der Bohr- und Fräsvorrichtung angeordnet. Insbesondere das horizontale Verfahren des Werkstückführungs- und -haltesystems erlaubt einen automatisierten Wechsel der Werkstücke, wenn ein entsprechendes Werkstückmagazin in Verfahrrichtung des Werkstückführungs- und -haltesystems angeordnet ist.
Neben dem Werkstück ist in dem Werkstückhalter ferner ein Werkzeugmagazin für einen Austausch von Werkzeugen dreh- und verfahrbar angeordnet.
Ein weiteres Bearbeitungszentrum ist aus der DE 10 2010 035 669 A1 bekannt, das ein in drei Raumrichtungen verschiebbares Bearbeitungswerkzeug und eine kardanische, um zwei Achsen schwenkbare Werkstückhalteraufnahme aufweist. Um ein Abfallen der Späne zu ermöglichen, ist die Werkstückhalteraufnahme vertikal angeordnet und erfolgt die Bearbeitung des Werkstücks in einer solchen vertikalen Anordnung.
JP 2004130419A und JP 2012-206209A offenbaren Bearbeitungszentren, bei denen verschiedene Werkzeugen in Werkzeugmagazinen vorgehalten und damit austauschbar sind.
In der Dentaltechnik bestehen allerdings typische Bedürfnisse, die durch ein dort eingesetztes Bearbeitungszentrum zu erfüllen sind. Insbesondere ist dabei die Individualität der zu erstellenden Werkstücke beachtlich.

Neben unterschiedlichsten Geometrien kommen unterschiedliche Werkstoffe und damit auch unterschiedliche Bohr- und Fräsverfahren zur Anwendung, so beispielsweise Nass- und Trockenfräsverfahren. Solch unterschiedliche Verfahren wie auch unterschiedliche Materialien erfordern bei der Bearbeitung dann schnelle Werkzeugwechsel. Auch ist das Problem der Bevorratung von zu bearbeitenden Rohlingen zu lösen, um eine möglichst rasche Abfolge der Erstellung von einzelnen fertigen Werkstücken sicherzustellen.

Gelöst wird diese technische Problematik bei einem numerisch gesteuerten Bearbeitungszentrum, insbesondere einem mehrachsigen Bohr- und Fräszentrum der Dentaltechnik, mit einer mehrachsigen, eine vertikale Spindel aufweisenden Bohr- und Fräsvorrichtung gemäß des Anspruchs 1 durch die Maßnahmen, dass eine Wechseleinheit für Rohlinge vorgesehen ist, ferner eine Greif- und Transportvorrichtung für das Wechseln der Rohlinge bzw. fertigen Werkstücke, und zwar innerhalb eines den Bearbeitungsraum umgebenden Gehäuses, und durch einen Frästisch mit einem eingelassenen Wechselschwenktisch für die Aufnahme der zu bearbeitenden Rohlinge und mit einem in den Frästisch eingelassenen Werkzeugmagazin.

Das Bearbeitungszentrum nach der Erfindung weist eine Vielzahl von Vorteilen gegenüber herkömmlichen Bearbeitungszentren auf, insbesondere bei einem Einsatz in der Dentaltechnik. So sind die Wege für das Wechseln der Rohlinge bzw. der fertig bearbeitenden Werkstücke sowie die Wege für den Austausch der Werkzeuge äußerst kurz gehalten, da diese innerhalb des Bearbeitungsraumes angeordnet sind und nicht von außen zugeführt werden müssen.

Entsprechend ist für das Umsetzen der Rohlinge bzw. der fertig bearbeiteten Werkstücke eine Greif- und Transportvorrichtung für vergleichsweise kurze Distanzen vorgesehen.

Das der Wechselschwenktisch für die Aufnahme der zu bearbeitenden Rohlinge in den Frästisch eingelassen ist, hat den Vorteil, dass die Antriebe für ein Verschwenken des Wechselschwenktisches unterhalb des Frästisches und damit außerhalb des Bearbeitungsraums angeordnet sein können, womit eine Verschmutzungsgefahr der Antriebe weitestgehend ausgeschlossen ist.

Ein weiterer Vorteil ist die Möglichkeit des Verschwenkens des Wechselschwenktisches, vorzugsweise um zwei Achsen, auf die dann bei der Bohr- und Fräsvorrichtung selbst verzichtet werden können und damit deren Konstruktion vereinfachen.

Die konstruktive Ausgestaltung und die Vorteile der einzelnen Komponenten werden nachstehend weiter erläutert.

Bei der Wechseleinheit für die Rohlinge ist vorgesehen, dass in dieser scheibenförmige, in einer Ringhalterung gefasste Rohlinge nebeneinander und beabstandet in Aufnahmen auf einer Grundplatte angeordnet sind und dass die Grundplatte an Führungsschienen aus einem rückwärtigen Bereich des Bearbeitungsraums in einen frontseitigen Bereich für eine Übergabe der Rohlinge bzw. Übernahme fertig bearbeiteter Werkstücke verfahrbar ist.

Die Rohlinge sind nebeneinander in seitlicher Richtung, parallel zur x-Achse, beabstandet gehalten, so dass die Greif- und Transportvorrichtung problemlos mit einem Greifer eine Ringhalterung für einen Wechsel eines Rohlings erfassen kann. Dieser Wechsel erfolgt in einem frontseitigen Bereich des Bearbeitungsraumes, in den die Wechseleinheit aus einem rückwärtigen Bereich des Bearbeitungsraums vorgefahren ist, entsprechend der y-Richtung. Erfolgt insbesondere ein Verfahren der
Greif- und Transportvorrichtung sowie der Wechseleinheit synchron, so kann der Austausch eines fertig bearbeiteten Werkstückes gegen einen neuen Rohling sehr schnell erfolgen. Insbesondere erlaubt das Verfahren der Wechseleinheit von einem rückwärtigen in einen frontseitigen Bereich des Bearbeitungsraums, parallel zu der y-Achse, die konstruktive Ausgestaltung der Wechseleinheit dahingehend, dass diese in dem rückwärtigen Bereich von einem Schwenkdeckel geschlossen ist, der sich mit einem Verfahren selbstständig öffnet bzw. schließt. Hierdurch sind die Rohlinge bzw. in der Wechseleinheit wieder abgelegte, bearbeitete Werkstücke vor einem Verschmutzen trotz der Anordnung innerhalb des Bearbeitungsraums während der Bearbeitung eines Rohlings, nass oder trocken, geschützt.

In weiterer konstruktiver Ausgestaltung ist vorgesehen, dass die Grundplatte den Frästisch brückenartig überspannt, die Seitenteile des Gehäuses durchsetzt und an den außerhalb des Gehäuses angeordneten Führungsschienen parallel zur y-Achse verfahrbar ist. Dieses Konzept dient zum einen dem Schutz der Führungsschienenführung vor einer Verschmutzung und zum anderen einer weitgehend freibleibenden, konstruktiven Ausgestaltung einer solchen Führungsschienenführung, da außerhalb des Bearbeitungsraums kaum konstruktive oder platzmäßige Beschränkungen vorhanden sind.

Solchem dient auch die Maßnahme, dass die Wechseleinheit die Rückwand des Gehäuses durchsetzt, so dass auch vergleichsweise große Rohlinge dennoch platzsparend vorgehalten und schnell gewechselt werden können.

In weiterer konstruktiver Ausgestaltung des Bearbeitungszentrums nach der Erfindung ist vorgesehen, dass die Greif- und Transportvorrichtung dreiachsig ausgebildet, nämlich in der x-y-Ebene verfahrbar und parallel zu der z-Achse zwei höhenstellbare Finger für das Erfassen einer Ringhalterung eines Rohlings aufweist.

Die räumliche Anordnung der Wechseleinheit sowie des Wechselschwenktisches erlaubt es, die Greif- und Transportvorrichtung lediglich dreiachsig auszubilden, seitlich in y-Richtung, in der Tiefe des Bearbeitungszentrums in der x-Richtung und in der Vertikalen in der z-Richtung.

Dabei ist weiter daran gedacht, dass der Zweifingergreifer in eine entsprechende Ausnehmung der Ringhalterung von oben her eingreift. In z-Richtung, insbesondere vertikal aus der Aufnahme der Wechselvorrichtung entnommen, verfährt die Greif- und Transportvorrichtung hin zu dem Wechselschwenktisch, der senkrecht um eine y-Achse verschwenkt wurde und setzt die Halterung mit Rohling nach einem Absenken in diesen Wechselschwenktisch dann ein. Damit bedarf es keines Verschwenken des von der Ringhalterung gefassten Rohlings durch die Greif- und Transportvorrichtung selbst.

Infolge dieser Maßnahme kann weiter vorgesehen sein, dass die Greif- und Transportvorrichtung gemeinsam mit der Bohr- und Fräsvorrichtung an rückwärtig angeordneten Führungsschienen seitlich, in y-Richtung, verfahrbar ist. Eine gesonderte Schienenführung allein für die Greif- und Transportvorrichtung kann so in vorteilhafter Weise vermieden werden.

Es ist weiter vorgesehen, dass die Führungsschienen für das seitliche Verfahren in y-Richtung an einer Brücke angeordnet sind, die den Bearbeitungsraum überspannt, und die wie bei der Wechseleinheit auf seitlichen, außerhalb des Bearbeitungsraums angeordneten Führungsschienen vor- und zurück, in x-Richtung, verfahrbar ist.

Die nötige Höhenstellbarkeit der zwei Finger der Greif- und Transportvorrichtung wird vorzugsweise durch einen elektrischen Schlitten sichergestellt.

Bei dem Bearbeitungszentrum nach der Erfindung ist weiter vorgesehen, dass ein Werkstückhalter des zweiachsigen Wechselschwenktischs mit Bezug auf eine Nulllage unterhalb des Frästisches angeordnet ist. Der zweiachsige Wechselschwenktisch verschwenkt vorzugsweise sowohl um eine x-Achse als auch eine y-Achse um bis zu 90° mit Bezug auf die x-y-Ebene, zweckmäßigerweise eine horizontal sich erstreckende Ebene. Verschwenkt der Wechselschwenktisch für einen Wechsel eines Rohlings bzw. für die Entnahme eines fertig bearbeiteten Werkstückes um die y-Achse kann die Greif- und Transportvorrichtung durch Verfahren in x-Richtung und nach entsprechender Höhenstellung, in z-Richtung, die Ringhalterung eines Rohlings in die Werkstückhalterung des Wechselschwenktisches einsetzen bzw. ein fertig bearbeitetes Werkstück in seiner Ringhalterung dem Wechselschwenktisch entnehmen.

Ein weiterer Vorteil der Anordnung des Wechselschwenktisches unterhalb des Frästisches besteht darin, dass unterhalb des Wechselschwenktisches eine Auffangwanne noch vorgesehen werden kann. Hierdurch wird der Bearbeitungsraum unterseitig abgeschlossen und kann das Bearbeitungszentrum nach der Erfindung auch mit Nass-Fräsverfahren betrieben werden. Insbesondere bei einem Nass-Verfahren ist eine Absaugung des Spülmittels unterhalb des Wechselschwenktisches zweckmäßig, beispielsweise in Form einer Wirbelabsaugung. Es kann dann, gegebenenfalls gereinigt, das Spülmittel erneut dem Arbeitsvorgang zugeführt werden.

Das Bearbeitungszentrum nach der Erfindung ist gegenüber herkömmlichen Bearbeitungszentren vergleichsweise kompakt und als Tischgerät ausgeführt. Um dennoch ein äußerst exaktes Arbeiten zu ermöglichen, werden Vibrationen durch mit ungleichmäßigen Lochungen versehene Bleche des Maschinengrundgestells gedämpft.

Das Wesen der Erfindung wird anhand der Zeichnung näher erläutert, in der lediglich ein Ausführungsbeispiel dargestellt ist. In der Zeichnung zeigt:
- Fig. 1:: eine Frontansicht des Bearbeitungszentrums nach der Erfindung,
- Fig. 2:: eine frontseitige Innenansicht,
- Fig. 3:: eine frontseitige, isometrische Darstellung,
- Fig. 4:: eine Darstellung gemäß Pfeil IV in Figur 2,
- Fig. 5:: eine rückseitige Darstellung,
- Fig. 6:: eine Draufsicht auf den freigestellten Bearbeitungsraum,
- Fig. 7:: eine frontseitige Ansicht des freigestellten Bearbeitungsraums,
- Fig. 8:: eine Seitenansicht,
- Fig. 9:: eine isometrische Unteransicht,
- Fig. 10:: eine isometrische Draufsicht,
- Fig. 11:: eine isometrische Darstellung nach Art einer Explosionszeichnung,
- Fig. 12:: eine isometrische Darstellung der freigestellten Wechseleinheit,
- Fig. 13:: eine frontseitige Ansicht der Wechseleinheit,
- Fig. 14:: eine seitliche Darstellung,
- Fig. 15:: eine isometrische Darstellung nach Art einer Explosionszeichnung,

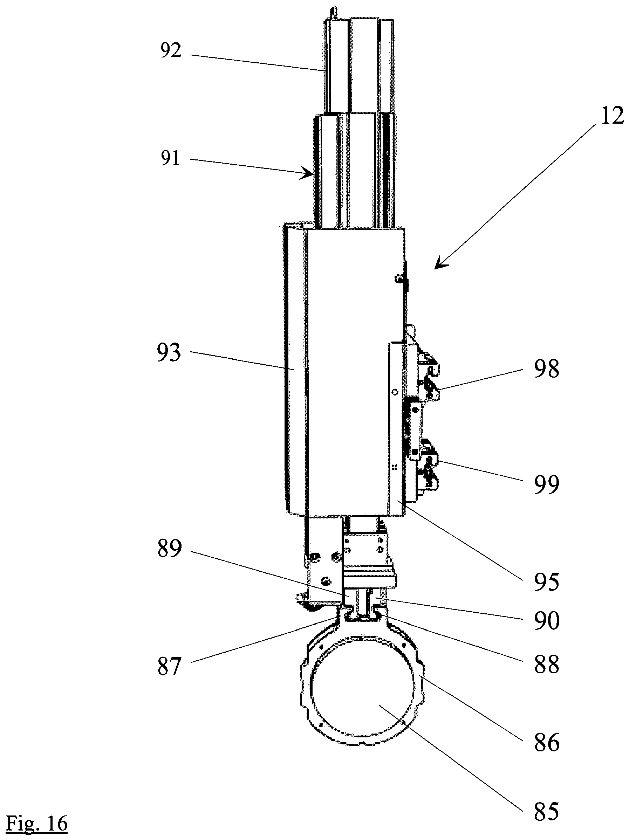

- Fig. 16:: eine seitliche, Darstellung der freigestellten Greif- und Transportvorrichtung, mit Bezug auf Figur 1 von links,

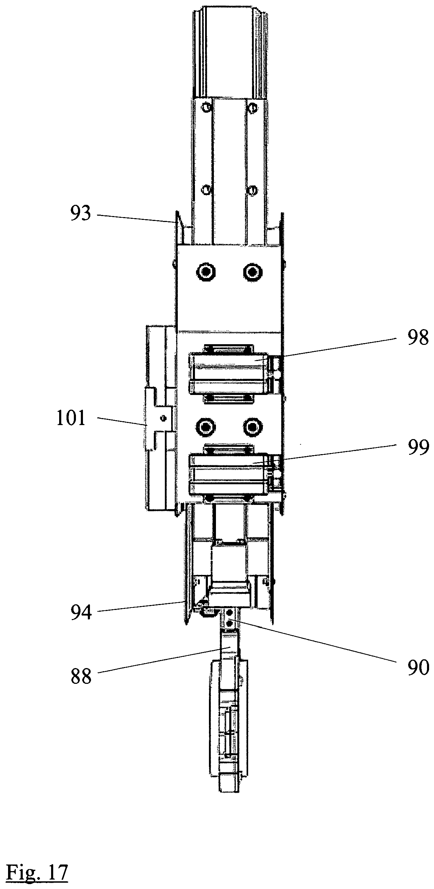

- Fig. 17:: eine rückwärtige Ansicht der Greif- und Transportvorrichtung,
- Fig. 18:: eine Draufsicht auf ein freigestelltes Werkzeugmagazin,
- Fig. 19:: eine seitliche Darstellung,
- Fig. 20:: eine isometrische Darstellung, teilweise nach Art einer Explosionszeichnung und
- Fig. 21:: eine vergrößerte stirnseitige Darstellung.

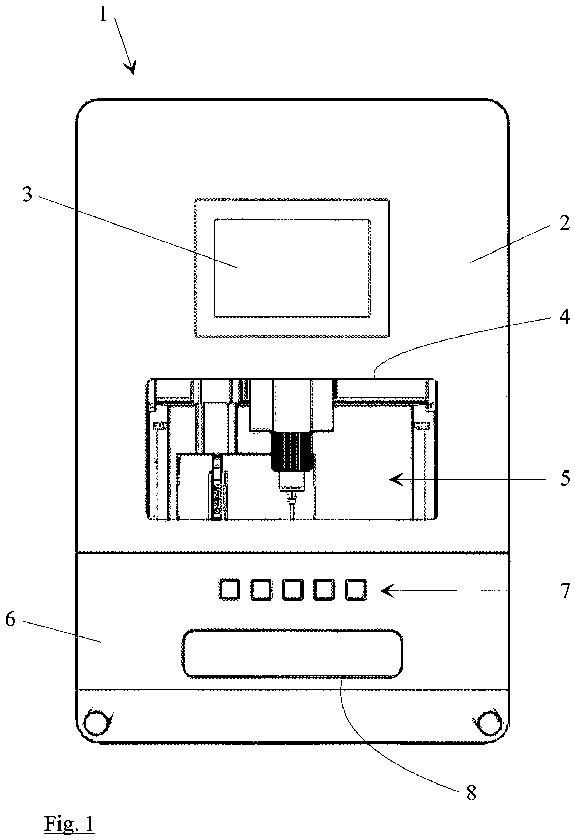

Figur 1 zeigt die Frontseite des Bearbeitungszentrums 1. Die oberen zwei Drittel der Front des Bearbeitungszentrums 1 werden von einer Türe 2 geschlossen, in die ein Bildschirm 3 eingelassen ist. Ein Fenster 4 erlaubt einen Einblick in den Bearbeitungsraum 5.

In eine untere Verkleidung 6 sind Bedienelemente 7 und eine Öffnung 8 für einen schubladenartigen Auszug einer Auffangwanne vorgesehen.

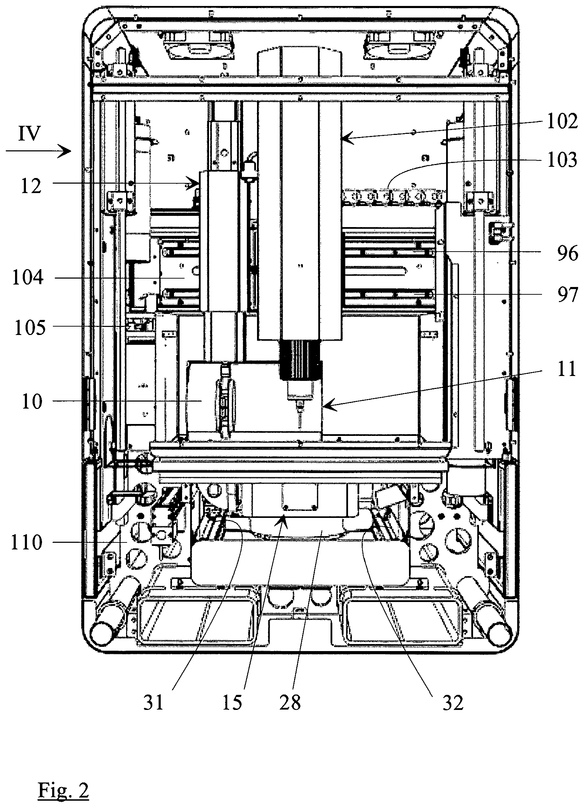

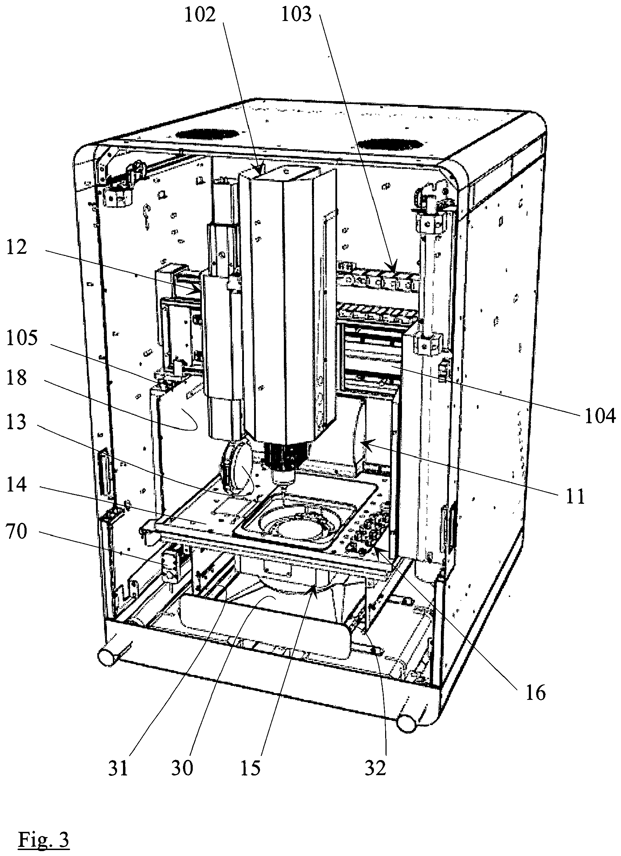

Die Figuren 2 und 3 zeigen das Innere des Bearbeitungszentrums von vorn. Innerhalb des Bearbeitungsraums 5 lässt sich die Anordnung von einer von einem Schwenkdeckel 10 geschlossenen Wechseleinheit 11, einer Greif- und Transportvorrichtung 12 für das Wechseln der Rohlinge 13 und einem in den Frästisch 14 eingelassenen Wechselschwenktisch 15 sowie einem ebenfalls in den Frästisch 14 eingelassenen Werkzeugmagazin 16 entnehmen.

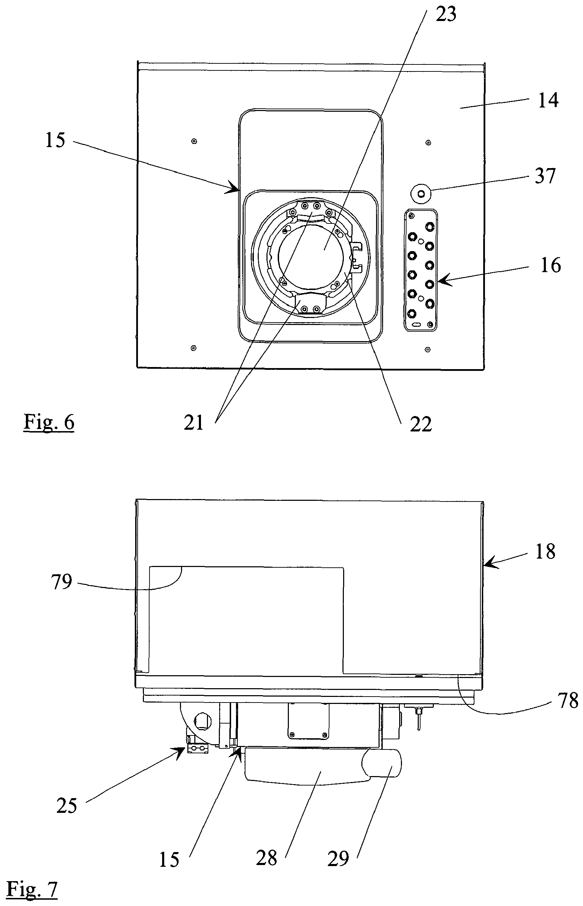

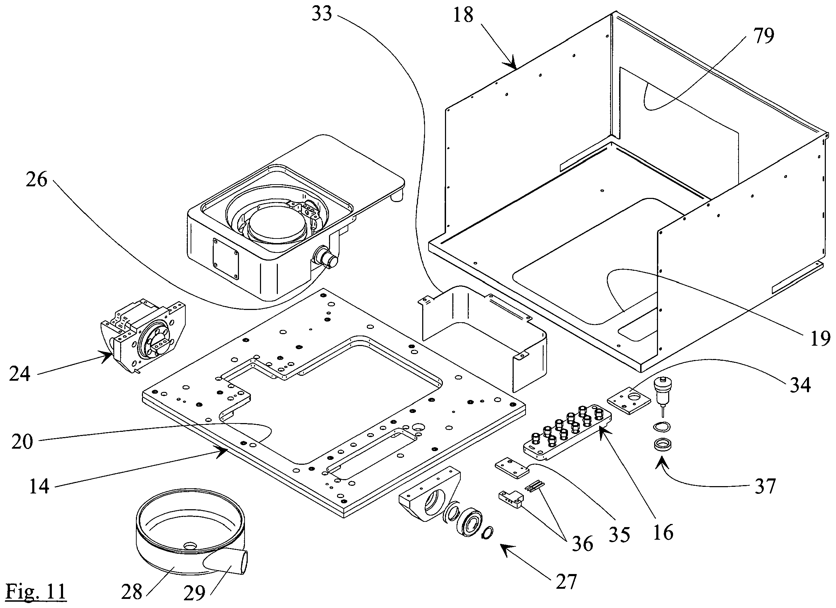

Anhand der Figuren 6 bis 11 wird der modulartige Aufbau des Bearbeitungsraums 5 weiter erläutert. Ein Gehäuse 18 sowie der Frästisch 14 bilden eine bauliche Einheit. Für die Aufnahme des Wechseltischs 15 weisen sowohl das Gehäuse 18 wie auch der Frästisch 14 jeweils eine Ausnehmung 19,20 auf, vgl. Fig. 11. Ist der Wechselschwenktisch 15 in den Frästisch 14 bzw. den Boden des Gehäuses 18 eingesetzt, befindet sich eine von den Werkstückhaltern 21 gehaltene Ringhalterung 22 mit einem Rohlings 23 unterhalb des Frästisches 14, wenn diese, wie dargestellt, in eine Nulllage, hier in einer x-y-Ebene, verschwenkt ist. Entsprechend liegen die Antriebe 24,25 für ein Verschwenken der Werkstückhalter 21 mit gefasster Ringhalterung 22 und Rohling 23 um die x-Achse bzw. y-Achse unterhalb des Frästisches und des Bodens des Gehäuses 18 und damit außerhalb des Bearbeitungsraums 5, so dass ein Verschmutzen der Antriebe 24,25 weitgehend vermieden ist.

Die Antriebe 24,25 sind einseitig vorgesehen und sind entsprechend für die Aufnahme der gegenüberliegenden Schwenkachsstummel 26 der Antriebe 24 gegenüberliegend Lager 27 mit Stehlagerbock, Wellendichtung, Kugellager und Sicherungsring angeordnet.

Unterseitig ist der Wechselschwenktisch 15 mit einem Auffangtrichter 28 abgeschlossen, der einen seitlichen Anschlussstutzen 29 aufweist, der einer Wirbelabsaugung von Staub und insbesondere Flüssigkeiten bei einem Nass-Fräsen dient.

Im übrigen werden Flüssigkeiten, Materialreste und dergleichen in einer unterhalb des Ablauftrichters anschließenden Auffangwanne 30 gesammelt, vergleiche Figur 3. Die Auffangwanne 30 ist schubladenartig an seitlich angeordneten Teleskopschienen 31,32 frontseitig für ein Entleeren ausziehbar.

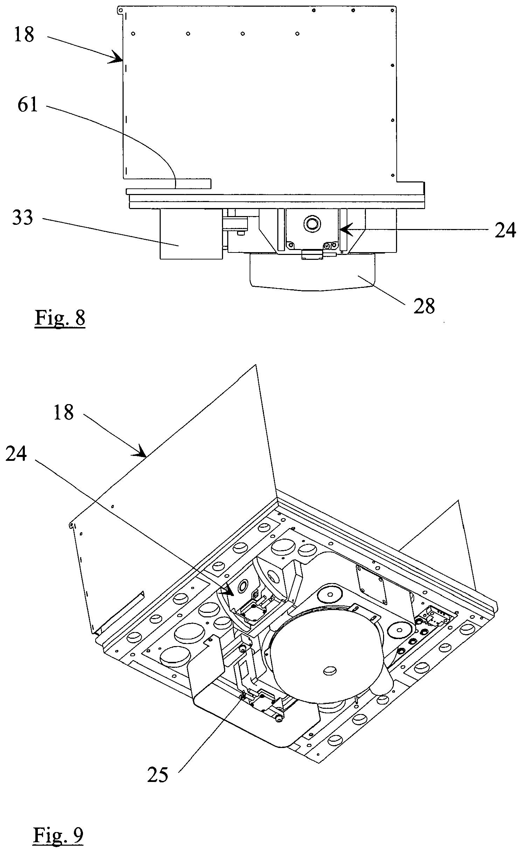

Der rückwärtige Antrieb 25 für ein Verschwenken des Werkstückhalters 21 um die y-Achse wird noch durch ein Abschirmblech 33 geschützt, vergleiche Figuren 8 und 9.

Weiter in den Frästisch 14 bzw. den Boden des Gehäuses 18 eingelassen ist das Werkzeugmagazin 16, gehalten von einem vorderen und einem hinteren Magazinhalter 34,35. Eine Sensoranordnung 36 für eine Magazinabfrage sowie ein Werkzeugtaster 37 sind ferner noch vorgesehen.

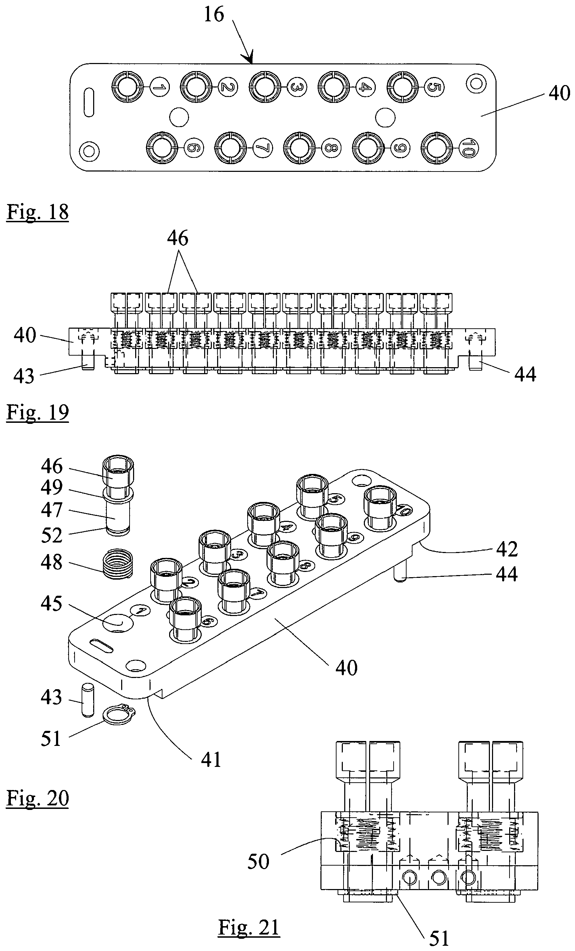

Das anhand der Figuren 18 bis 21 näher erläuterte Werkzeugmagazin 16 weist einen im wesentlichen quaderförmigen Grundkörper 40 auf, der an seinen Stirnseiten mit Eckausnehmungen 41,42 versehen ist. In diese Eckausnehmungen 41,42 greifen die Magazinhalter 34,35 passgenau ein derart, dass die Oberfläche des Grundkörpers 40 in der selben Ebene liegt wie die Oberfläche des Frästisches 14. Eine Verriegelung des Grundkörpers 40 mit den Magazinhaltern 34,35 erfolgt, vorzugsweise schnell wechselbar, mittels diagonal gesetzter Zylinderstifte 43,44.

In den Grundkörper 40 sind, beispielhaft in zwei Reihen und auf Lücke versetzt, abgestufte Bohrungen 45 für hier zehn Werkzeughalter 46 eingebracht, vergleiche Figur 21.

Die Werkzeughalter 46 weisen einen Schaft 47 auf, auf den eine Druckfeder 48 bis an einen umlaufenden Flansch 49 aufgeschoben ist. Gefangen zwischen dem Flansch 49 und einer Ringschulter 50 der abgestuften Bohrung 45 wird die Druckfeder 48 bei einem Niederdrücken des Werkzeughalters 46 gespannt. Einen Auszug des Werkzeughalters 46 nach oben verhindert ein Sicherungsring 51 unterhalb des Grundkörpers 40 in einer Ringnut 52 in dem Schaft 49.

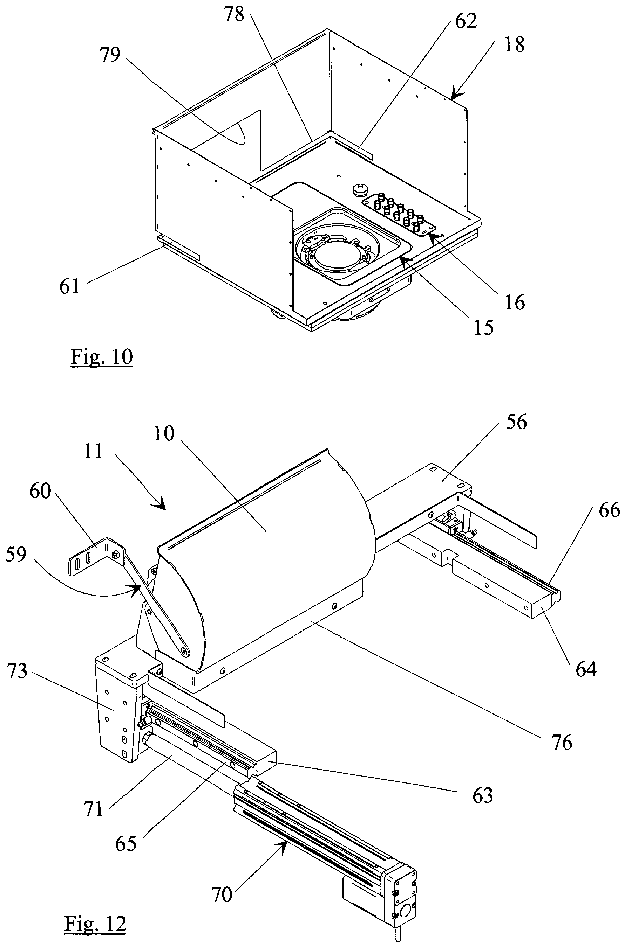

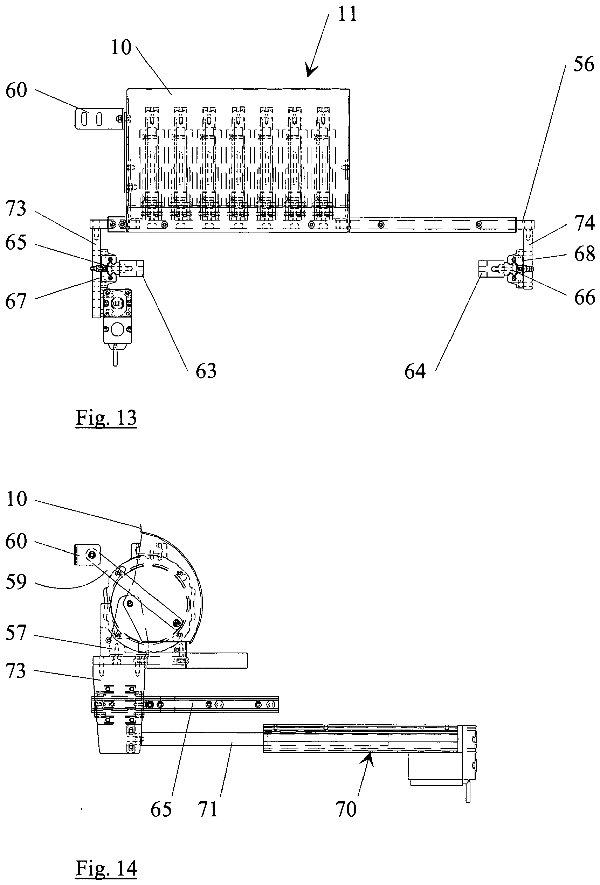

Die gemäß den Figuren 2 und 3 erkennbar in einem rückwärtigen Bereich des Bearbeitungsraums 5 angeordnete Wechseleinheit 11 wird anhand der Figuren 12 bis 15 weiter erläutert.

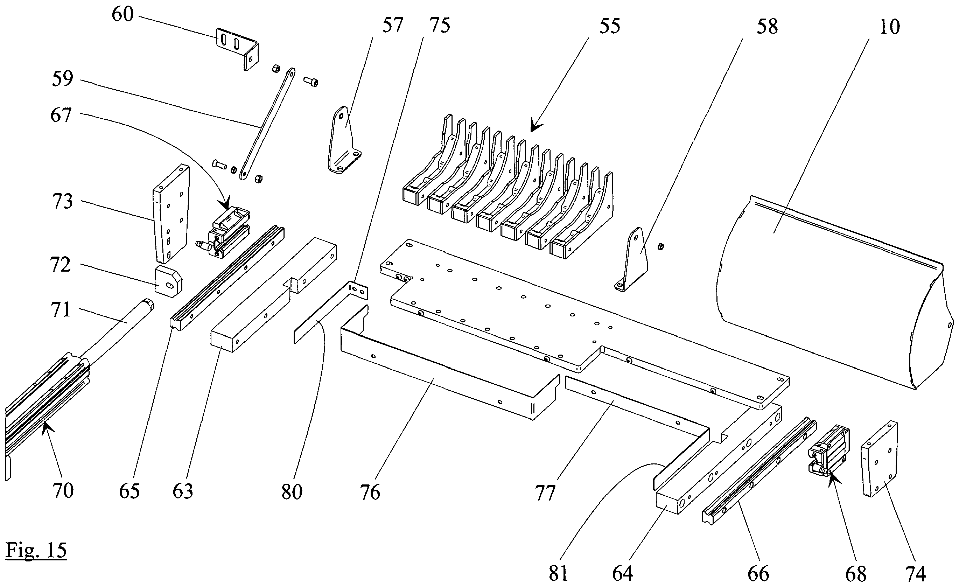

In der Wechseleinheit 11 werden die von einer Ringhaltung gefassten Rohlinge vorgehalten und dient die Wechseleinheit 11 ebenso der Aufnahme fertig bearbeiteter Werkstücke. Das Vorhalten erfolgt in, in einer seitlichen Ansicht L-förmigen Aufnahmen 55, vergleiche Figur 15, hier sieben Stück, nebeneinander, in x-Richtung, angeordnet. Die Aufnahmen 55 sind auf einer Grundplatte 56 angeordnet. Ebenfalls auf der Grundplatte 56 angeordnet sind zwei Lagerböcke 57,58, in denen die Achsen des Schwenkdeckels 10 gelagert sind.

Mit einem Verfahren der Grundplatte 56 in y-Richtung verschwenkt der Schwenkdeckel 10 aufgrund seiner Anbindung über einen Hebel 59 zwischen dem Schwenkdeckel 10 und einem maschinenfesten Winkel 60.

Die Grundplatte 56 ist brückenartig ausgebildet und überspannt, Schlitze 61,62 in dem Gehäuse 18 durchsetzend, den Frästisch 14, vergleiche Figur 10.

Außerhalb des Bearbeitungsraums 5 überspannt die Grundplatte 56 noch zwei maschinenfeste Befestigungsleisten 63,64, an denen in y-Richtung verlaufende Führungsschienen 65,66 festgelegt sind.

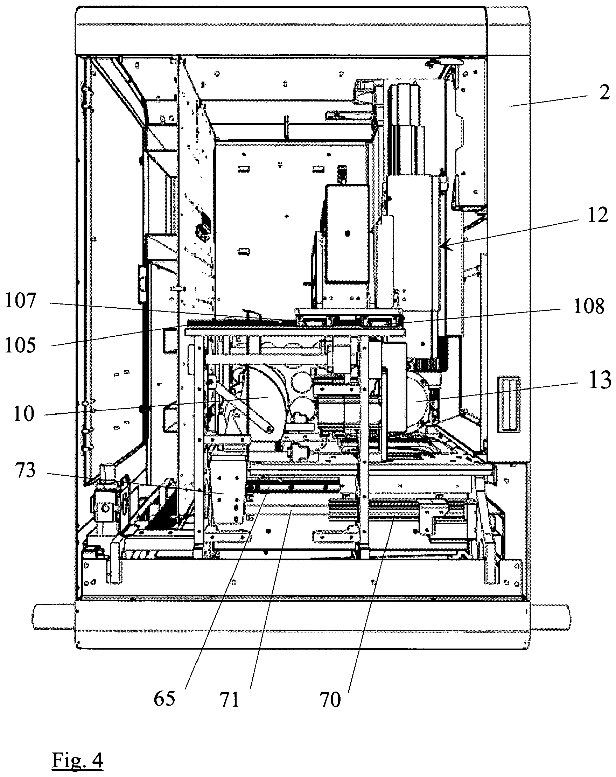

An den Führungsschienen 65,66 werden zwei Führungswagen 67,68 der Wechseleinheit 11 geführt, die an Seitenteilen 73,74 der Grundplatte 56 festgelegt sind, vergleiche auch Figur 4.

Das Verschieben erfolgt mittels eines Zylinders 70, dessen Kolbenstange 71 über einen Flansch 72 an dem der Grundplatte 56 unterseitig vorstehenden Seitenteil 72 angreift.

Andernends der Grundplatte 56 ist lediglich das Seitenteil 74 vorgesehen, während frontseitige Abdeckungen 75-77 den Spalt zwischen der den Frästisch 14 überspannenden Grundplatte 56 und der Oberseite des Frästisches 14 schließen.

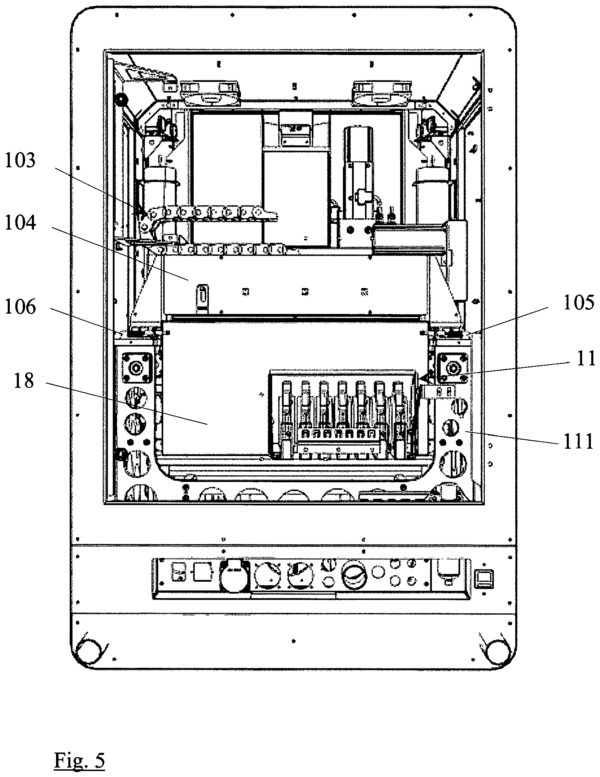

Da die Rohlinge 13 vergleichsweise groß sind, durchsetzt die Grundplatte 56 der Wechseleinheit 11 in einem weiteren Schlitz 78 die Rückwand des Gehäuses 18 und ist für den Durchtritt der Aufnahmen 55 eine Ausnehmung 79 rückwandseitig des Gehäuses 18 noch vorgesehen, vgl. auch Fig. 4 und Fig. 5. Ist die Wechseleinheit 11 in ihre Nichtgebrauchsstellung, in den rückwärtigen Bereich des Bearbeitungsraums 5 verfahren, werden die Schlitze 61,62 durch Abwinklungen 80,81 der Abdeckungen 75,77 wieder geschlossen.

Verfährt die Wechseleinheit 11 in y-Richtung aus dem rückwärtigen Bereich zur Front des Bearbeitungszentrums 1 hin, öffnet sich der Deckel 10 und Rohlinge in den Aufnahmen 55 können von der Greif- und Transportvorrichtung 12 entnommen bzw. können fertige Werkstücke in leere Aufnahmen 55 der Wechseleinheit 11 abgesetzt werden.

Figur 12 zeigt einen Rohling oder ein Werkstück 85 in seiner Ringhalterung 86, auf deren Geometrie die Werkstückhalterungen 21 des Wechselschwenktisches 15 sowie die Aufnahmen 55 der Wechseleinheit 11 abgestimmt sind. Aufgrund der äußeren Geometrie der Ringhalterung 86 ist sichergestellt, dass diese Ringhalterungen 86 in den Aufnahmen 55 der Wechseleinheit 11 exakt positioniert sind, nämlich mit zwei oben angeordneten Abwinklungen 87,88. Für ein Fassen der Ringhalterung 86 fahren Finger 89,90 der Greif- und Transportvorrichtung 12 zwischen die Abwinklungen 88,89 und verriegeln. Dazu werden die Finger 89,90 gespreizt und die aufeinander zu weisenden Nasen der Abwinklungen 87,88 werden in korrespondierenden Ausnehmungen der Finger 89,90 aufgenommen.

Mittels eines kompakten elektrischen Schlittens 91 kann dann eine Höhenverstellung an einer Säule 92 erfolgen. Zwei Abdeckungen 93,94 verhindern ein Verschmutzen. Des weiteren sind seitliche Anschlussleisten 95 für einen weiter nicht dargestellten Faltenbalg vorgesehen, der zumindest abschnittsweise die Führungsschienen 96,97 überdeckt, an denen die Greif- und Transportvorrichtung 12 seitlich, in x-Richtung, verfahren werden kann, vergleiche Figuren 2 und 3.

Für das Verfahren an den Führungsschienen 96,97 weist die Greif- und Transportvorrichtung 12 rückseitig zwei Führungswagen 98,99 auf.

Desweiteren ist über ein T-förmiges Verbindungsstück 101 eine Verbindung mit der Bohr- und Fräsvorrichtung 102 hergestellt, so dass die Bohr- und Fräsvorrichtung 102 gemeinsam mit der Greif- und Transportvorrichtung 12 an den Führungsschienen 96,97 in x-Richtung verfahrbar ist. Das Stellen der Greif- und Transportvorrichtung 12 und der Bohr- und Fräsvorrichtung 102 in x-Richtung erfolgt mittels eines Kettentriebs 103.

Die rückseitig der Greif- und Transportvorrichtung 12 bzw. der Bohr- Fräsvorrichtung 102 angeordneten Führungsschienen 96,97 sind an einer Brücke 104 festgelegt, die den Arbeitsraum 5 überspannt, vergleiche Figur 4, linke Bildhälfte, und Figur 5. Für ein Verfahren in y-Richtung stützt sich die Brücke 104 auf jeder Seite mit zwei Führungswagen 107,108 auf der Führungsschiene 105 bzw. 106 ab.

Damit ist die Greif- und Transportvorrichtung 12 wie die Bohr- und Fräsvorrichtung 102 dreiachsig ausgebildet.

Mit dem Bearbeitungszentrum 1 sollen hochpräzise Arbeiten ausgeführt werden. Um ein vibrationsarmes Arbeiten zu ermöglichen, sind Bleche 110,111 des Maschinengrundgestells noch mit einer ungleichmäßigen Lochung versehen, vergleiche Figur 2 und Figur 5.

## Patentansprüche

1. Numerisch gesteuertes Bearbeitungszentrum, insbesondere mehrachsiges Bohr- und Fräszentrum der Dentaltechnik, mit einer mehrachsigen, eine vertikale Spindel aufweisenden Bohr- und Fräsvorrichtung,
- einer Wechseleinheit (11) für Rohlinge (13),
- einer Greif- und Transportvorrichtung (12) für das Wechseln der Rohlinge (13) bzw. fertigen Werkstücke, innerhalb eines den Bearbeitungsraum (5) umgebenden Gehäuses (18) und **gekennzeichnet durch**
- einen Frästisch (14) mit einem eingelassenen Wechselschwenktisch (15) für die Aufnahme der zu bearbeitenden Rohlinge (23) und mit einem in den Frästisch (14) eingelassenen Werkzeugmagazin (16).

2. Bearbeitungszentrum nach Anspruch 1, **dadurch gekennzeichnet, dass** in der Wechseleinheit (11) scheibenförmige, in einer Ringhalterung gefasste Rohlinge nebeneinander und beabstandet in Aufnahmen (55) auf einer Grundplatte (56) angeordnet sind und dass die Grundplatte (56) an Führungsschienen (65,66) aus einem rückwärtigen Bereich des Bearbeitungsraums (5) in einen frontseitigen Bereich für eine Übergabe der Rohlinge (13) bzw. Übernahme fertig bearbeiteter Werkstücke verfahrbar ist.

3. Bearbeitungszentrum nach Anspruch 2, **dadurch gekennzeichnet, dass** die Wechseleinheit (11) in dem rückwärtigen Bereich von einem Schwenkdeckel (10) geschlossen ist, der sich mit einem Verfahren selbstständig öffnet bzw. schließt.

4. Bearbeitungszentrum nach Anspruch 2 oder 3, **dadurch gekennzeichnet, dass** die Grundplatte (56) den Frästisch (14) brückenartig überspannt, die Seitenteile des Gehäuses (18) durchsetzt und an den außerhalb des Gehäuses (18) angeordneten Führungsschienen (65,66) verfahrbar ist.

5. Bearbeitungszentrum, nach einem der Ansprüche 3 bis 4, **dadurch gekennzeichnet, dass** die Wechseleinheit (11) die Rückwand des Gehäuses (18) durchsetzt.

6. Bearbeitungszentrum nach einem der vorangehenden Ansprüche, **dadurch gekennzeichnet, dass** die Greif- und Transportvorrichtung (12) dreiachsig ausgebildet zwei höhenstellbaren Finger (89,90) für das Erfassen einer Ringhalterung (86) eines Rohlings (85) aufweist.

7. Bearbeitungszentrum nach Anspruch 6, **dadurch gekennzeichnet, dass** die Greif- und Transportvorrichtung (12) gemeinsam mit der Bohr- und Fräsvorrichtung (102) an rückseitig angeordneten Führungsschienen (96,97) seitlich verfahrbar ist.

8. Bearbeitungszentrum nach Anspruch 7, **dadurch gekennzeichnet, dass** die Führungsschienen (96,97) für das seitliche Verfahren an einer Brücke (104) angeordnet sind, die den Bearbeitungsraum (5) überspannt, und die auf seitlichen, außerhalb des Bearbeitungsraums (5) angeordneten Führungsschienen (105,106), vor- und zurück verfahrbar ist.

9. Bearbeitungszentrum nach einem der Ansprüche 6 bis 8, **dadurch gekennzeichnet, dass** die Finger (89,90) mittels eines elektrischen Schlitten (91) höhenstellbar sind.

10. Bearbeitungszentrum nach einem der vorangehenden Ansprüche, **dadurch gekennzeichnet, dass** ein Werkstückhalter (21) des zweiachsigen Wechselschwenktischs (15) mit Bezug auf eine Nulllage unterhalb des Frästisches (14) angeordnet ist.

11. Bearbeitungszentrum nach Anspruch 10, **dadurch gekennzeichnet, dass** unterhalb des Wechselschwenktisches (15) eine Auffangwanne (30) vorgesehen ist.

12. Bearbeitungszentrum nach Anspruch 11, **dadurch gekennzeichnet, dass** unterhalb des Wechselschwenktisches (15) eine Wirbelabsaugung vorgesehen ist.

13. Bearbeitungszentrum nach einem der vorangehenden Ansprüche, **gekennzeichnet durch** mit ungleichmäßigen Lochungen versehene Bleche (110,111) des Maschinengrundgestells.

## Claims

1. A numerically controlled machining center, in particular a multiaxial drilling and milling center of dental technology, comprising a multiaxial drilling and milling device, which has a vertical spindle, an exchanger unit (11) for blanks (13), a gripping and transporting device (12) for exchanging the blanks (13) or finished workpieces, respectively, within a housing (18) surrounding the machining area (5), and **characterized by**
- a milling table (14) comprising a recessed exchanger pivot table (15) for accommodating the blanks (23) to be machined and comprising a tool magazine (16) embedded in the milling table (14).

2. The machining center according to claim 1, **characterized in that** disk-shaped blanks, which are mounted in a ring holder, are arranged next to one another and spaced apart in the exchanger unit (11) in accommodations (55) on a base plate (56) and that the base plate (56) can be moved out of a rearward area of the machining area (5) into a front-side area on guide rails (65, 66) for a transfer of the blanks (13) or take-over, respectively, of fully machined workpieces.

3. The machining center according to claim 2, **characterized in that**, in the rearward area, the exchanger unit (11) is closed by means of a pivot cover (10), which opens or closes independently, respectively, in response to a movement.

4. The machining center according to claim 2 or 3, **characterized in that** the base plate (56) spans the milling table (14) in a bridge-like manner, permeates the side parts of the housing (18) and can be moved on the guide rails (65, 66), which are arranged outside of the housing (18).

5. The machining center according to one of claims 3 to 4, **characterized in that** the exchanger unit (11) permeates the rear wall of the housing (18).

6. The machining center according to one of the preceding claims, **characterized in that**, being embodied in a triaxial manner, the gripping and transporting device (12) has two height-adjustable fingers (89, 90) for capturing a ring holder (86) of a blank (85).

7. The machining center according to claim 6, **characterized in that** the gripping and transporting device (12), together with the drilling and milling device (102), can be moved laterally on guide rails (96, 97), which are arranged on the rear side.

8. The machining center according to claim 7, **characterized in that** the guide rails (96, 97) for the lateral movement are arranged on a bridge (104), which spans the machining area (5) and which can be moved back and forth on lateral guide rails (105, 106), which are arranged outside of the machining area (5).

9. The machining center according to one of claims 6 to 8, **characterized in that** the fingers (89, 90) are height-adjustable by means of an electric carriage (91).

10. The machining center according to one of the preceding claims, **characterized in that** a workpiece holder (21) of the biaxial exchanger pivot table (15) is arranged below the milling table (14) with respect to a dead center position.

11. The machining center according to claim 10, **characterized in that** provision is made below the exchanger pivot table (15) for a collecting tray (30).

12. The machining center according to claim 11, **characterized in that** provision is made below the exchanger pivot table (15) for a vortex extraction.

13. The machining center according to one of the preceding claims, **characterized by** metal plates (110, 111) of the machine base frame, which are provided with irregular perforations.

## Revendications

1. Centre de traitement commandé numériquement, notamment centre de fraisage et de perçage multiaxes de la technique dentaire, comportant un dispositif de fraisage et de perçage multiaxes, présentant une broche verticale,
- une unité de changement (11) pour ébauches (13),
- un dispositif de préhension et de transport (13) pour le changement des ébauches (13), respectivement des pièces finies, à l'intérieur d'un logement (18) entourant l'espace de traitement (5) et **caractérisé par**
- une table de fraisage (14) avec une table pivotante de changement (15) ménagée pour recevoir les ébauches (23) à traiter et comportant un magasin d'outil (16) ménagé dans la table de fraisage (14).

2. Centre de traitement selon la revendication 1, **caractérisé en ce que** dans l'unité de changement (11) des ébauches en forme de disque, encastrées dans un support annulaire sont disposées les unes à côté des autres et espacées dans des réceptables (55) sur une plaque de vase (56) et **en ce que** la plaque de base (56) est déplaçable sur des rails de guidage (65,66) à partir d'une zone arrière de l'espace de traitement (5)dans une zone avant en vue d'une transmission des ébauches (13), respectivement reprise de pièces traitées finies.

3. Centre de traitement selon la revendication 2, **caractérisé en ce que** l'unité de changement (11) dans la zone arrière est fermée par un couvercle pivotant (10), qui s'ouvre, respectivement se ferme automatiquement avec un procédé.

4. Centre de traitement selon la revendication 2 ou 3, **caractérisé en ce que** la plaque de base (56) enjambe en forme de pont la table de fraisage (14), traverse les parties latérales du logement (18) et peut être déplacé dans les rails d guidage (65,66) disposés à l'extérieur du logement (18).

5. Centre de traitement selon les revendications 3 à 4, **caractérisé en ce que** l'unité de changement (11) traverse la paroi arrière du logement (18).

6. Centre de traitement selon une des revendications précédentes, **caractérisé en ce que** le dispositif de préhension et de transport (12) présente deux doigts réglables en hauteur (89,90) à configuration à trois axes en vue de la détection d'un support annulaire (86) d'une ébauche (85).

7. Centre de traitement selon la revendication 6, **caractérisé en ce que** le dispositif de préhension et de transport (12)est déplaçable latéralement en commun avec le dispositif de fraisage et de perçage (102) sur des rails de guidage (96,97) disposés à l'arrière.

8. Centre de traitement selon la revendication 7, **caractérisé en ce que** les rails de guidage (96,97) sont disposés en vie du déplacement latéral sur un pont (104), qui enjambe l'espace de traitement (5), et qui est déplaçable d'avant en arrière latéralement, à l'extérieur des rails de guidage (105,106) disposés à l'extérieur de la zone de traitement (5).

9. Centre de traitement selon une des revendications 6 à 8, **caractérisé en ce que** les doigts (89,90) sont réglables en hauteur au moyen d' un chariot électrique (91).

10. Centre de traitement selon une des revendications précédentes, **caractérisé en ce que** un porte-outils (21) de la table pivotante de changement à deux axes (15) est disposé par rapport à une position zéro en dessous de la table de fraisage (14).

11. Centre de traitement selon la revendication 10, **caractérisé en ce que** une cuve de récupération (30) est prévue en dessous de la table pivotante de changement (15).

12. Centre de traitement selon la revendication 11, **caractérisé en ce que** une aspiration tourbillonnante est prévue en dessous de la table pivotante de changement (15).

13. Centre de traitement selon une des revendications précédentes, **caractérisé par** des tôles (110,111) pourvues d'alésages irréguliers du châssis de base de machine.
